# EUROPÄISCHE PATENTSCHRIFT

(11) **EP 3 388 810 B1**
(45) Veröffentlichungstag und Bekanntmachung des Hinweises auf die Patenterteilung: **11.03.2020**
(21) Anmeldenummer: 18165982.2
(22) Anmeldetag: 05.04.2018
(51) Int. Cl.: G01M 1/22, G01M 1/28, G01P 15/097

(54) **VERFAHREN SOWIE EINE VORRICHTUNG ZUR UNWUCHTERKENNUNG**
METHOD AND DEVICE FOR UNBALANCE DETECTION
PROCÉDÉ ET DISPOSITIF DE DÉTECTION DE BALANCEMENT

(30) Priorität: 13.04.2017 DE 102017108109
(43) Veröffentlichungstag der Anmeldung: 17.10.2018
(73) Patentinhaber: ebm-papst Mulfingen GmbH & Co. KG, 74673 Mulfingen (DE)
(72) Erfinder: NÖTH, Frederik, 97072 Würzburg (DE); WYSTUP, Ralph, 74653 Künzelsau (DE); DRUSCHEL, Robert, 74653 Künzelsau (DE); HOPF, Michael, 97980 Bad Mergentheim (DE); PEPPEL, Pattrick, 97980 Bad Mergentheim (DE)
(74) Vertreter: Staeger & Sperling Partnerschaftsgesellschaft mbB

(56) Entgegenhaltungen:
- EP-A2- 0 770 860
- DE-A1-102014 116 527
- DE-A1-102015 102 476

## Beschreibung

Die Erfindung betrifft ein Verfahren sowie eine Vorrichtung zur Durchführung eines Verfahrens zur sensordiagnostischen Überwachung und Erkennung einer Unwucht einer sich rotierenden Maschine.

Im Stand der Technik sind bereits diverse Verfahren bekannt, um Diagnosen zu Fertigungsmaschinen oder Produktionsanlagen und deren zeitlichem Verhalten zu treffen. Die Anlagenverfügbarkeit einer rotierenden Maschine, wie z. B. eines Motors stellt einen wichtigen Faktor für die wirtschaftliche Nutzung dieser Einrichtung dar.

Die Hauptaufgabe eines Verfahren zur Überwachung des Zustandes von insbesondere rotierenden oder drehbaren Maschinen besteht darin, möglichst ohne Betriebsunterbrechung eine Beurteilung des aktuellen Maschinenzustandes, der Belastung der Maschine und jeglicher Veränderungen des Maschinenzustandes betreffend deren Rundlauf zu ermöglichen. Unter Maschinenzustand versteht man dabei u.a. die Bewertung der Unwucht der Maschine auf der Basis bestimmter Betriebsparameter.

Bei rotatorisch arbeitenden Maschinen kann es durch ungleichmäßige Masseverteilung zu einer umlaufenden radialen Kraftkomponente kommen, welche zu Vibrationen und erhöhtem Verschleiß der Maschine führt. Wünschenswert wäre es daher die sich je nach Betriebsdauer verändernde, ungleichmäßige Masseverteilung der rotierenden Komponente (Unwucht) detektieren zu können.

Durch vorbeugende Instandhaltung und Erfahrungswerte können die Verfügbarkeiten der rotierenden Vorrichtungen verbessert und gleichzeitig die Ausfallzeiten der rotierenden Anlagen sowie die Kosten der Instandhaltung reduziert werden. Nachteilig ist dabei, dass es selten möglich ist, genaue Vorhersagen über den aktuellen Zustand und den Rundlauf der gerade rotierenden Maschine zu treffen und daher auch keine Vorhersagen oder Erkenntnisse möglich sind, den Zeitpunkt des Ausfalls von Maschinenteilen, Lager oder Verschleißteilen zu treffen. Ferner ist die vorbeugende Instandhaltung kein geeignetes Mittel die Unwucht zu erkennen, sondern dient nur der Vermeidung von Maschinenstillstandzeiten. Allerdings ist es dadurch immer wieder der Fall, dass Teile ausgetauscht werden, die noch über eine hohe Reststandzeit verfügen und ggf. noch keine Unwucht vorhanden ist.

Eine alternative Form stellt eine zustandsbezogene und regelmäßige Ermittlung des Maschinenzustands dar. Die dafür entwickelten und im Stand der Technik verfügbaren Mess- und Auswerteverfahren dienen der Überwachung und Auswertung von Prozessparametern und Maschinenkennwerten, wie z. B. Temperatur, Druck, Drehmoment oder elektrische Stromdaten. Häufig wird auch eine Schwingungsanalyse zur Maschinendiagnose eingesetzt. Mit einer derartigen Analyse ist es möglich, eine sich durch zunehmende Unwucht erkennbare Störung bereits im Frühstadium zu erkennen und zu diagnostizieren, um Folgeschäden und Ausfallzeiten zu vermeiden.

So sind beispielsweise Verfahren zur Überwachung von sich kontinuierlich bewegenden und/oder rotierenden Maschinenteilen, insbesondere von Maschinenlagern, durch Analyse von Schwingungsmustern bekannt. Die dafür notwendigen Schwingungsüberwachungssysteme messen die Vibration der sich über einen längeren Zeitraum hin rotierenden Maschine und geben zum Beispiel eine unmittelbare Fehlermeldung bei Grenzwertüberschreitung des Summenschwingungspegels an.

Nachteilig ist bei solchen Verfahren, dass einerseits erst beim konkreten Überschreiten von Grenzwertparametern lediglich eine Detektion erfolgt und andererseits auch schwer einzuschätzen ist, woher das geänderte Schwingungsverhalten stammt. Die vermutete Ursache einer Fehlermeldung lässt sich häufig nur schwer mit der tatsächlichen Ursache in Verbindung bringen.

Solche einfachen Kennwerte des Schwingungssignals lassen demnach keine zuverlässige Aussage über die "Unwucht" von rotierenden Maschinen zu und erst recht keine Vorhersage. Bei komplexen Maschinen, die jeweils mehrere rotierende Bauteile und Antriebe nebeneinander vereinen, ist eine zielgerichtete Überwachung kaum möglich.

Alternativ wird die Unwucht im Stand der Technik üblicherweise durch die Detektion von Drehzahlveränderungen, Veränderungen der Motorströme oder durch Beschleunigungsaufnehmer detektiert. Die Auswertung von Drehzahl und Motorstrom ist richtungsabhängig und wird üblicherweise bei einer Ausrichtung des Geräts mit der Welle in horizontaler Richtung eingesetzt, da hierbei durch die Schwerkraft ein Hubeffekt entsteht. Beschleunigungsaufnehmer sind nicht an bestimmte Richtungen gebunden, geben aber Auskunft über alle einwirkenden Beschleunigungen, auch über solche die nicht in Verbindung zur Rotation der Maschine stehen, wie zum Beispiel Fremdeinwirkungen.

Vorrichtungen und Verfahren zur Unwuchterkennung sind aus DE 102014116527 A1 und EP 0770860 A2 bekannt.

Es ist ausgehend vom Stand der Technik daher Aufgabe der vorliegenden Erfindung, die vorbesagten Nachteile zu überwinden und eine Vorrichtung sowie ein Verfahren, zur einfachen und zuverlässigen Überwachung und Erkennung der Unwucht einer rotierenden Maschine vorzuschlagen.

Diese Aufgabe wird durch die in Anspruch 1 angegebenen Merkmale gelöst. Mit dem erfindungsgemäßen Verfahren zur insbesondere sensordiagnostischen Überwachung einer rotierenden Maschine wird es möglich, automatisch im laufenden Betrieb Zustandsinformationen über die Unwucht der rotierenden Maschine, insbesondere einer dynamischen Unwucht (auch Momentenunwucht genannt) zu erkennen, d.h. den Zustand zu detektieren bei dem die Rotationsachse nicht mit einer der stabilen Hauptträgheitsachsen des rotierenden Bauteils übereinstimmt.

Grundgedanke der Erfindung ist es, die Detektion einer ungleichmäßigen Masseverteilung am Rotationskörper durch die parallele d. h. gleichzeitige Erfassung und Auswertung von Drehzahl des rotierenden Körpers und Beschleunigung am nicht rotierenden Körper zu lösen. Die dazu benötigten Signale liefern einerseits ein Beschleunigungsaufnehmer im Gehäuse bzw. am nicht rotierenden Bauteil und andererseits ein Hall-Sensor, welcher vorzugsweise direkt am Stator der rotierenden Maschine positioniert ist. Durch die Einbeziehung der Drehzahl der rotierenden Maschine kann die Auswertung auf die rotationsbedingten Schwingungen eingegrenzt und die äußeren Einflüsse können sozusagen ausgeblendet werden.

Bei der Erfindung macht man sich die Erkenntnis zu Nutze, dass eine ungleichmäßige Masseverteilung am Rotationskörper zu einer mit der Drehzahl umlaufenden Beschleunigungskomponente in zur Rotationsachse orthogonalen Richtung führt.

Hierzu wird erfindungsgemäß mittels eines Beschleunigungsaufnehmers ein entsprechendes Signal aufgenommen und die Komponenten des Beschleunigungssignals herausgefiltert, welche durch die drehzahlbedingte Anregung des Geräts ausgelöst werden.

Gleichzeitig wird vom Hall-Sensor die aktuelle Drehfrequenz der rotierenden Maschine ermittelt. In Abhängigkeit zur ermittelten Drehfrequenz wird das Signal des Beschleunigungsaufnehmers bandpassgefiltert. Aus dem gefilterten Signal werden die zur Drehachse senkrechten, axialen Beschleunigungsamplituden berechnet und ein geglätteter Mittelwert gebildet. Die errechneten Werte werden mit im System hinterlegten Referenzwerten verglichen und bei Überschreiten der Grenzwerte ein entsprechendes Signal erzeugt.

Es ist daher erfindungsgemäß ein Verfahren zur sensordiagnostischen Überwachung und Erkennung einer Unwucht einer rotierenden Maschine mit den folgenden Schritten vorgesehen:
a. Ermittlung von Beschleunigungssignalen des Gehäuses oder eines nicht rotierenden Bauteils der rotierenden Maschine mit einem (ersten) Sensor;
b. Ermittlung von Signalen zur Drehzahlbestimmung der rotierenden Maschine mittels eines (zweiten) Sensors;
c. Zuführen und Auswerten der Sensorsignale mittels einer Auswerteeinheit, wobei eine sich mit der Drehzahl der rotierenden Maschine auftretende, zur Drehachse orthogonale Beschleunigungskomponente herausgefiltert wird und diese Komponente mit einem vorbestimmten Grenzwert vergleichen wird.

Erfindungsgemäß wird hierzu ein einziger Mikrocontroller vorgesehen, dem die Signale des Drehzahlsensors und die Signale des Beschleunigungssensors zugeführt werden und der die Berechnung und Analyse der Signale und deren drehzahlabhängiger Zusammenhang durchführt.

Ein weiterer Aspekt der vorliegenden Erfindung betrifft eine Vorrichtung zur Überwachung und Erkennung einer Unwucht einer sich drehenden Maschine, ausgebildet mit einem ersten Sensor zu Ermittlung der Beschleunigungen, der durch die Unwucht bedingte Beschleunigungskomponente in Radialrichtung und mit einem zweiten Sensor zur gleichzeitigen Ermittlung der Drehzahl, sowie einem Mikrocontroller, der die Korrelation der beiden Signale auswertet und die radiale Beschleunigungskomponente aufgrund der Unwucht, die mit der ermittelten Rotationsgeschwindigkeit umläuft, herauszufiltern.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen dabei:
- Fig. 1: eine schematische Darstellung einer rotierenden Maschine mit einer erfindungsgemäßen Vorrichtung und
- Fig.2: eine schematische Darstellung des Erfindungsgemäßen Verfahrens mit Hilfe eines Blockschaltbilds.

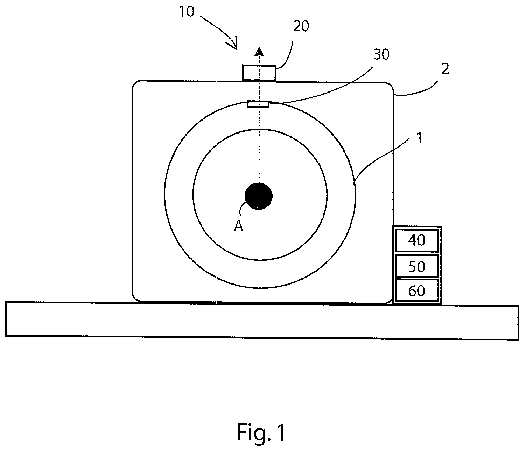

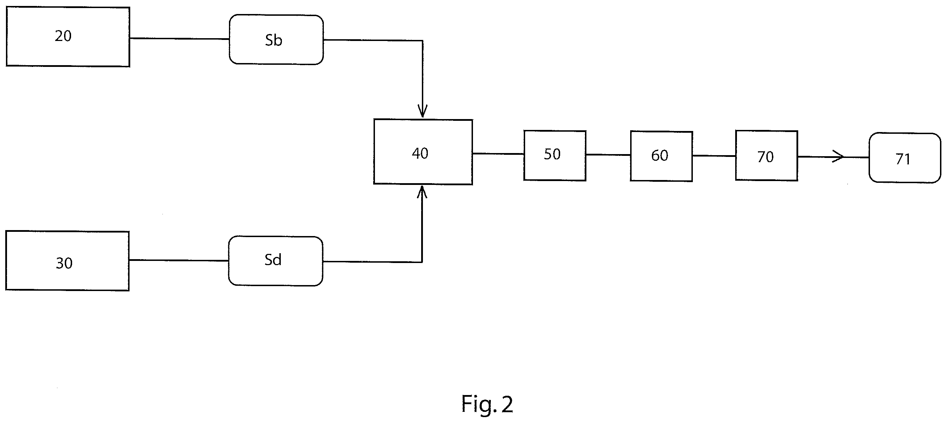

Im Folgenden wird die Erfindung mit Bezug auf die Figuren 1 und 2 näher erläutert, wobei gleiche Bezugszeichen auf gleiche strukturelle und/oder funktionale Merkmale hinweisen.

In Fig. 1 ist eine schematische Darstellung einer rotierenden Maschine 1 mit einer erfindungsgemäßen Vorrichtung 10 gezeigt. Die rotierende Maschine 1 ist in einem statischen Gehäuse 2 ausgebildet und mit einer Vorrichtung 10 zur Überwachung und Erkennung einer Unwucht "U" der rotierenden Maschine 1 mit einem ersten im Gehäuse 2 angeordneten Sensor 20 ausgebildet. Der Sensor 20 ist vorliegend ein Beschleunigungssensor und dient der Ermittlung von Beschleunigungssignalen Sb. Der Beschleunigungssensor 20 ist am statischen Teil der Vorrichtung auf die sich die Unwuchtsbeschleunigung periodisch überträgt, nämlich vorliegend am Gehäuse 2 angebracht.

In den Beschleunigungssignalen Sb sind diejenigen für eine Unwucht signifikanten Beschleunigungskomponenten enthalten, die sich mit der Drehzahl der rotierenden Maschine periodisch wiederholen.

Ferner ist ein zweiter Sensor (30), nämlich ein Hall-Sensor zur gleichzeitigen Ermittlung von Signalen Sd zur Drehzahlbestimmung der rotierenden Maschine vorgesehen und am Stator montiert.

Darüber hinaus ist die Vorrichtung mit einem Mikrocontroller 40 ausgebildet, der wie in dem Blockschaltbild der Figur 2 erkennbar, die Sensorsignale Sb, Sd verarbeitet, wobei dieser so ausgebildet ist, die Korrelation der beiden Signale Sb, Sd auszuwerten und Beschleunigungskomponente in Radialrichtung aufgrund der Unwucht, die mit der ermittelten Drehzahl umläuft, herauszufiltern.

Somit ist gemäß dieser Ausführungsform möglich eine Auswertung der Beschleunigung vorzunehmen, die sich auf die Anregung 1. Ordnung (umlaufende radiale Kraftkomponente bedingt durch Drehung des Rotationskörpers) beschränkt, wodurch sich der Rechenaufwand des Mikrocontrollers entsprechend reduziert. Ferner werden Störeinflüsse durch Fremdanregung ausgeblendet und beim Überschreiten eines vorgegebenen Schwellenwertes mit radialer Beschleunigungskomponente wird eine Unwucht detektiert.

Wie in dem Ausführungsbeispiel in den Figuren 1 und 2 dargestellt, dienen eine Signalaufbereitungseinheit 50 und eine Signalverarbeitungseinheit 60 zur Signalverarbeitung der vom Mikrocontroller 40 erhaltenen und verarbeiteten Signalen Sb, Sd und wird das Ergebnis an eine Ausgabeeinheit 70 und/oder einer Schnittstelle 71 bereitgestellt.

Somit kann, wie im Blockschaltbild der Figur 2 exemplarisch gezeigt, das folgende Verfahren dazu genutzt werden, eine Unwucht einfach und sicher zu detektieren. Hierzu sind die folgenden Schritte erforderlich:
- Ermittlung von Beschleunigungssignalen Sb mit dem Beschleunigungssensor 20 am Gehäuses 2;
- Ermittlung von Signalen Sd mittels des Hall-Sensors 30 zur Drehzahlbestimmung der rotierenden Maschine 1;
- Zuführen und Auswerten der Sensorsignale Sb, Sd mittels einer Auswerteeinheit aus Mikrocontroller 40, Signalaufbereitungseinheit 50 und eine Signalverarbeitungseinheit 60, wobei eine sich mit der Drehzahl der rotierenden Maschine auftretende radiale Beschleunigungskomponente erfasst wird und diese Komponente mit einem vorbestimmten Grenzwert verglichen wird.

Beim letzten Schritt werden zur Beurteilung der Unwucht der geglättete Mittelwert der radialen Komponente des Beschleunigungssignals Sb ermittelt, wobei vor der Ermittlung der radialen Komponente des Beschleunigungssignals Sb das Signal durch eine Signalaufbereitung- und/oder Signalverarbeitung 50, 60 bandpassgefiltert wurde.

## Patentansprüche

1. Rotierende Maschine (1) in einem statischen Gehäuse (2) ausgebildet mit einer Vorrichtung (10) zur Überwachung und Erkennung einer Unwucht (U), die von der rotierenden Maschine (1) verursacht ist, mit einem ersten im Gehäuse (2) der rotierenden Maschine angeordneten Sensor (20) zu Ermittlung von Beschleunigungssignalen (Sb) des Gehäuses (2) und mit einem zweiten Sensor (30) zur gleichzeitigen Ermittlung von Signalen (Sd) zur Drehzahlbestimmung der rotierenden Maschine, sowie einem Mikrocontroller (40) dem die Sensorsignale (Sb, Sd) zugeführt werden, wobei dieser ausgebildet ist, die Korrelation der beiden Signale (Sb, Sd) auszuwerten **dadurch gekennzeichnet, dass** diejenige Beschleunigungskomponente in Radialrichtung aufgrund der Unwucht der rotierenden Maschine, die mit der ermittelten Drehzahl umläuft, herausgefiltert wird.

2. Rotierende Maschine (1) nach Anspruch 1, **dadurch gekennzeichnet, dass** der erste Sensor (20) ein Beschleunigungssensor ist.

3. Rotierende Maschine (1) nach Anspruch 1 oder 2, **dadurch gekennzeichnet, dass** der zweite Sensor (30) ein Hall-Sensor ist.

4. Rotierende Maschine (1) nach einem der vorhergehenden Ansprüche, **dadurch gekennzeichnet, dass** der erste Sensor (20) am Gehäuse (2) oder einem nicht rotierenden Bauteil der rotierenden Maschine (1) angebracht ist.

5. Rotierende Maschine (1) nach einem der vorhergehenden Ansprüche, **dadurch gekennzeichnet, dass** der zweite Sensor (20) am Stator der rotierenden Maschine (1) angebracht ist.

6. Rotierende Maschine (1) nach einem der vorhergehenden Ansprüche, **dadurch gekennzeichnet, dass** ferner eine Signalaufbereitungseinheit (50) zur Signalaufbereitung der vom Mikrocontroller (40) ausgewerteten Signale vorgesehen ist.

7. Rotierende Maschine (1) nach einem der vorhergehenden Ansprüche, **dadurch gekennzeichnet, dass** ferner eine Signalverarbeitungseinheit (60) zur Signalverarbeitung der vom Mikrocontroller (40) und vorzugsweise von einer Signalaufbereitungseinheit (50) aufbereiteten Signale vorgesehen ist.

8. Verfahren zur sensordiagnostischen Überwachung und Erkennung einer mit der Drehzahl umlaufenden Unwuchtkomponente einer rotierenden Maschine (1) gemäß einer Vorrichtung nach Anspruch 1 mit den folgenden Schritten:
a. Ermittlung von Beschleunigungssignalen (Sb) des Gehäuses (2) mit dem Sensor (20);
b. Ermittlung von Signalen (Sd) zur Drehzahlbestimmung der rotierenden Maschine (1) mittels des zweiten Sensors;
c. Zuführen und Auswerten der Sensorsignale (Sb, Sd) mittels einer Auswerteeinheit (40, 50, 60), wobei eine mit der ermittelten Drehzahl der rotierenden Maschine auftretende Beschleunigungskomponente in Radialrichtung herausgefiltert wird und diese Komponente mit einem vorbestimmten Grenzwert vergleichen wird.

9. Verfahren nach Anspruch 8, wobei der erste Sensor (20) ein Beschleunigungssensor ist und/oder der zweite Sensor (30) ein Hall-Sensor ist.

10. Verfahren nach Anspruch 8, wobei zur Beurteilung der Unwucht der geglättete Mittelwert der Komponente des Beschleunigungssignals (Sb) in Radialrichtung ermittelt wird.

## Claims

1. Rotating machine (1) in a static housing (2), formed with a device (10) for monitoring and detecting an unbalance (U) caused by the rotating machine (1), with a first sensor (20) arranged in the housing (2) of the rotating machine for determining acceleration signals (Sb) of the housing (2) and with a second sensor (30) for simultaneously determining signals (Sd) for determining the rotational speed of the rotating machine, as well as a microcontroller (40) to which the sensor signals (Sb, Sd) are supplied, wherein said microcontroller is configured to evaluate the correlation of the two signals (Sb, Sd), **characterized in that** the acceleration component in the radial direction due to the unbalance of the rotating machine rotating at the determined rotational speed is filtered out.

2. Rotating machine (1) according to claim 1, **characterized in that** the first sensor (20) is an acceleration sensor.

3. Rotating machine (1) according to claim 1 or 2, **characterized in that** the second sensor (30) is a Hall sensor.

4. Rotating machine (1) according to one of the preceding claims, **characterized in that** the first sensor (20) is attached to the housing (2) or a non-rotating component of the rotating machine (1).

5. Rotating machine (1) according to one of the preceding claims, **characterized in that** the second sensor (20) is attached to the stator of the rotating machine (1).

6. Rotating machine (1) according to one of the preceding claims, **characterized in that** furthermore a signal processing unit (50) is provided for signal processing of the signals evaluated by the microcontroller (40).

7. Rotating machine (1) according to one of the preceding claims, **characterised in that** furthermore a signal processing unit (60) is provided for signal processing of the signals processed by the microcontroller (40) and preferably by a signal processing unit (50).

8. Method for sensor-diagnostic monitoring and detection of an unbalance component of a rotating machine (1) rotating at the rotational speed according to a device according to claim 1, comprising the steps of:
a. Determining acceleration signals (Sb) of the housing (2) with the sensor (20);
b. Determining signals (Sd) for determining the rotational speed of the rotating machine (1) by means of the second sensor;
c. Supplying and evaluating the sensor signals (Sb, Sd) by means of an evaluation unit (40, 50, 60), wherein an acceleration component occurring with the determined rotational speed in the radial direction of the rotating machine is filtered out and this component is compared with a predetermined limit value.

9. Method according to claim 8, wherein the first sensor (20) is an acceleration sensor and/or the second sensor (30) is a Hall sensor.

10. Method according to Claim 8, wherein the smoothed average value of the component of the acceleration signal (Sb) in the radial direction is determined for evaluating the unbalance.

## Revendications

1. Machine rotative (1) dans un bottier statique (2) réalisé avec un dispositif (10) de surveillance et de détection d'un balancement (U), qui est provoqué par la machine rotative (1), avec un premier capteur (20) agencé dans le boîtier (2) de la machine rotative pour la détermination de signaux d'accélération (Sb) du boîtier (2) et avec un deuxième capteur (30) pour la détermination simultanée de signaux (Sd) pour la détermination de la vitesse de rotation de la machine rotative, ainsi qu'un microcontrôleur (40) auquel les signaux de capteur (Sb, Sd) sont acheminés, dans laquelle celui-ci est réalisé pour évaluer la corrélation des deux signaux (Sb, Sd), **caractérisée en ce que**
les composantes d'accélération dans la direction radiale sont filtrées en raison du balancement de la machine rotative, qui tourne à la vitesse de rotation déterminée.

2. Machine rotative (1) selon la revendication 1, **caractérisée en ce que** le premier capteur (20) est un capteur d'accélération.

3. Machine rotative (1) selon la revendication 1 ou 2, **caractérisée en ce que** le deuxième capteur (30) est un capteur à effet Hall.

4. Machine rotative (1) selon l'une quelconque des revendications précédentes, **caractérisée en ce que** le premier capteur (20) est monté sur le boîtier (2) ou un composant non rotatif de la machine rotative (1).

5. Machine rotative (1) selon l'une quelconque des revendications précédentes, **caractérisée en ce que** le deuxième capteur (20) est monté sur le stator de la machine rotative (1).

6. Machine rotative (1) selon l'une quelconque des revendications précédentes, **caractérisée en ce qu'**une unité de préparation de signal (50) est prévue en outre pour la préparation de signal des signaux évalués par le microcontrôleur (40).

7. Machine rotative (1) selon l'une quelconque des revendications précédentes, **caractérisée en ce qu'**une unité de traitement de signal (60) est prévue en outre pour le traitement de signal des signaux préparés par le microcontrôleur (40) et de préférence par une unité de préparation de signal (50).

8. Procédé de surveillance par diagnostic de capteur et de détection d'une composante de balancement tournant à la vitesse de rotation d'une machine rotative (1) selon un dispositif selon la revendication 1 avec les étapes suivantes :
a. détermination de signaux d'accélération (Sb) du boîtier (2) avec le capteur (20) ;
b. détermination de signaux (Sd) pour la détermination de la vitesse de rotation de la machine rotative (1) au moyen du deuxième capteur ;
c. acheminement et évaluation des signaux de capteur (Sb, Sd) au moyen d'une unité d'évaluation (40, 50, 60), dans lequel une composante d'accélération apparaissant avec la vitesse de rotation déterminée de la machine rotative dans la direction radiale est filtrée et cette composante est comparée avec une valeur limite prédéterminée.

9. Procédé selon la revendication 8, dans lequel le premier capteur (20) est un capteur d'accélération et/ou le deuxième capteur (30) est un capteur à effet Hall.

10. Procédé selon la revendication 8, dans lequel la moyenne lissée de la composante du signal d'accélération (Sb) dans la direction radiale est déterminée pour l'appréciation du balancement.
